Europäisches Patentamt

European Patent Office

Office européen des brevets

(11) Publication number: **0 170 943**
**B1**

(12) **EUROPEAN PATENT SPECIFICATION**

(45) Date of publication of patent specification: **29.03.89**

(21) Application number: **85108856.7**

(22) Date of filing: **16.07.85**

(51) Int. Cl.⁴: **G 21 C 7/26,** G 21 C 7/04,
G 21 C 7/22, G 21 C 9/02,
G 21 C 3/32

(54) **Nuclear fuel assembly with improved spectral shift rods.**

(30) Priority: **06.08.84 US 638333**

(43) Date of publication of application:
**12.02.86 Bulletin 86/07**

(45) Publication of the grant of the patent:
**29.03.89 Bulletin 89/13**

(84) Designated Contracting States:
**BE DE FR GB IT SE**

(56) References cited:
**EP-A-0 054 237**
**FR-A- 249 800**
**FR-A-1 197 868**
**FR-A-1 541 063**

(73) Proprietor: **WESTINGHOUSE ELECTRIC
CORPORATION**
**Westinghouse Building Gateway Center
Pittsburgh Pennsylvania 15222 (US)**

(72) Inventor: **Ferrari, Harry Max**
**144 W. Swissvale Avenue
Pittsburgh Pennsylvania 15218 (US)**

(74) Representative: **Patentanwälte Dipl.-Ing. R.
Holzer Dipl.-Ing. (FH) W. Gallo
Ludwigstrasse 26
D-8900 Augsburg (DE)**

Courier Press, Leamington Spa, England.

## Description

This invention relates generally to nuclear reactors and, more particularly, to a nuclear fuel assembly therefor.

It is known that the fuel cycle of a pressurized water reactor (PWR) can be extended by designing an excessive amount of reactivity into the reactor core at start-up so that, as the reactivity is depleted over the life of the core, there will still be sufficient reactivity left to sustain core operation for an extended period of time. However, since there is an excess of reactivity at the beginning of core life, steps must be taken at that time to properly control it.

One technique to control reactivity is to produce an initial spectral shift which has the effect of increasing the epithermal (low reactivity) part of the neutron spectrum at the expense of the thermal (high reactivity) part. This results in production of fewer than thermal neutrons and decreased fission. Then, as fission naturally decreases after extended reactor operation, a reverse shift back to the thermal part of the neutron spectrum at the expense of the epithermal part is undertaken. Such control technique is primarily accomplished through the use of displacer rods. As the name implies, these rods are placed in the core to initially displace some of the moderator water therein, thereby to decrease the reactivity. Then, at some point during the core cycle as reactivity is consumed, the displacement associated with these rods is removed from the core so that the amount of moderation and therewith the level of reactivity in the core are increased.

One approach considered for removing this displacement is through the use of a mechanism similar to those associated with control rods, or of a drive mechanism such as described in EP—A—0054237 corresponding to U.S.—A—4,432,934, which is operated at the given time to withdraw the displacer rods.

Another approach contemplated for removing the displacement is to have membranes provided on the ends of the displacer rods and adapted to be penetrated at some point in time to allow the rods to be filled with water. A small heating element surrounding a specially indented end cap on the hollow displacer rod is energized at the appropriate time, and the heat generated thereby weakens the indented part of the end cap to an extent enabling the external water pressure to rupture the end cap and thus the rod to become filled with water.

A further approach used to remove moderator displacement is to use, as displacer rods, rods which are filled with a suitable gas, such as helium, and designed to longitudinally expand as the internal gas pressure increases with progressing reactor operation. When the rod has become elongated enough to move against a spike on the adjacent portion of the top nozzle, the spike will pierce the end plug of the rod and thus permit the rod to become filled with water.

This approach is described in U.S.—A—4,371,495.

It is the principal object of the invention to provide a simpler and less costly way of removing moderator displacement, one which also can be tailored to take effect at the desired time during the core cycle.

Accordingly, the invention resides in a nuclear fuel assembly for use in a nuclear reactor core which has excess reactivity initially designed into it and has moderator/coolant liquid flowing therethrough when in operation, said fuel assembly including means for controlling the excess reactivity, said means comprising at least one spectral-shift rod in the form of a hermetically sealed tubular member containing a burnable poison material which generates gas when exposed to the operating conditions existing in the reactor core and which material is soluble in said moderator/coolant liquid, and which tubular member has a wall region adapted to rupture at a predetermined level of gas pressure within the tubular member, thereby to enable the moderator/coolant liquid to come into contact with the burnable poision material therein.

Thus, and unlike the earlier approaches which rely upon the use of some special means in removing moderator displacement, the invention is utilizing the interaction between two component parts of the spectral-shift rod itself, namely the burnable poison material, e.g., a boron substance therein in a form capable of evolving gas and soluble in the moderator/coolant liquid, and the wall region of the rod which is designed to rupture when a given internal pressure level is reached.

The spectral-shift rod embodying the present invention can be readily tailored to match the particular conditions prevailing in the fuel assembly when in use. For instance, by varying the initial internal pressures of rods within different groups in the fuel assemblies of a core, one could have the different groups of rods rupture at different times during the core cycle so that removal of water displacement would be phased-in in increments. The same result, that is, incremental removal of displacement, can also be achieved by varying the plenum volume of different groups of the rods. In short, by properly varying these two parameters — initial internal pressure and plenum volume — of the rods, it is possible to introduce moderator/coolant water, thereby to increase the reactivity, as desired during the core operating cycle.

Preferred embodiments of the invention will now be described, by way of example only, with reference to the accompanying drawings, in which:

Fig. 1 is an elevational view, partly in section, of a nuclear fuel assembly shown in vertically foreshortened form and with parts broken away for clarity;

Fig. 2 is an enlarged, vertically forshortened, sectional view of a spectral-shift rod embodying the invention and shown as it is prior to rupture;

Fig. 3 is a view similar to Fig. 2 but showing the rod after rupture of the weakened portion and filling of the rod; and

Fig. 4 is another view similar to Fig. 2 but showing the rod disposed in one of the control rod guide thimbles of the fuel assembly.

In the following description, like reference characters designate like or corresponding parts throughout the several views of the drawings, and terms such as "forward", "rearward", "left", "right", "upwardly", "downwardly", and the like are used as words of convenience not to be construed as limiting terms.

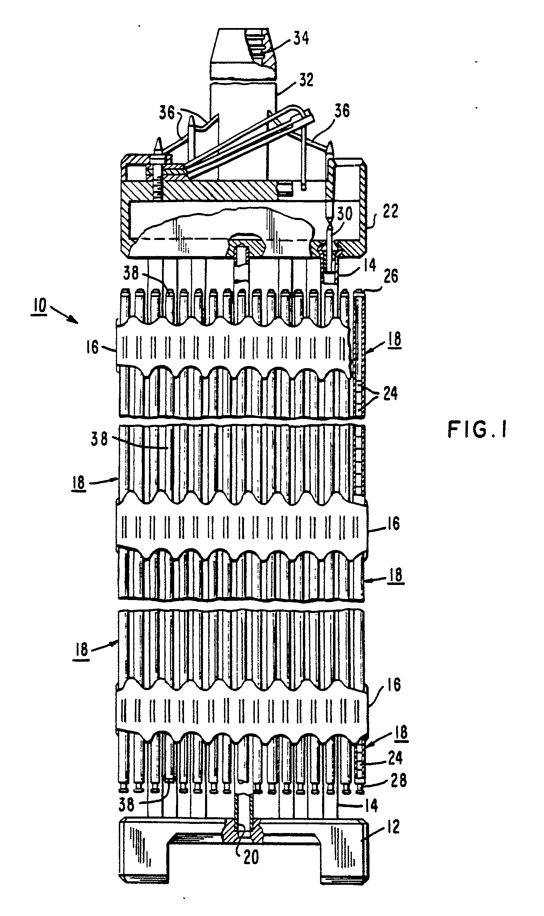

Referring now to the drawings, and particularly to Fig. 1, the fuel assembly illustrated therein and generally designated with numeral 10 is the type used in pressurized water reactors (PWR). Basically, it comprises a lower end structure or bottom nozzle 12 for supporting the assembly on the lower core plate (not shown) in the core region of a reactor (not shown); a plurality of guide tubes or thimbles 14 projecting upward from the bottom nozzle 12; a plurality of transverse grids 16 axially spaced along the guide thimbles 14; an organized array of elongate fuel rods 18 transversely spaced and supported by the grids 16; an instrumentation tube 20; and a upper end structrue of top nozzle 22 attached to the upper ends of the guide thimbles 14.

Each of the fuel rods 18 contains nuclear fuel pellets 24, and its opposite ends are sealed by means of end plugs 26 and 28. As well known in the art, the fuel pellets 24 composed of fissile material are the source of the reactive power produced by the PWR, and a liquid moderator/coolant, such as water with or without boron therein, is pumped upward through the fuel assemblies of the core to extract therefrom heat for the production of useful work.

The fission process is controlled by means of control rods 30 which are reciprocally movable in the guide thimbles 14 located at predetermined positions in the fuel assembly 10. The control rods are moved by means of a rod cluster control mechanism 32 disposed in the top nozzle 22 and having an internally threaded cylindrical member 34 with a plurality of radially extending flukes or arms 36 each of which has a control rod 30 connected thereto, all as well known in the art.

As initially explained herein, it is customary to prolong the life of the reactor core of a PWR by designing into the core an excess of reactivity which must be reduced at the early stage of the core cycle and is inceased later on.

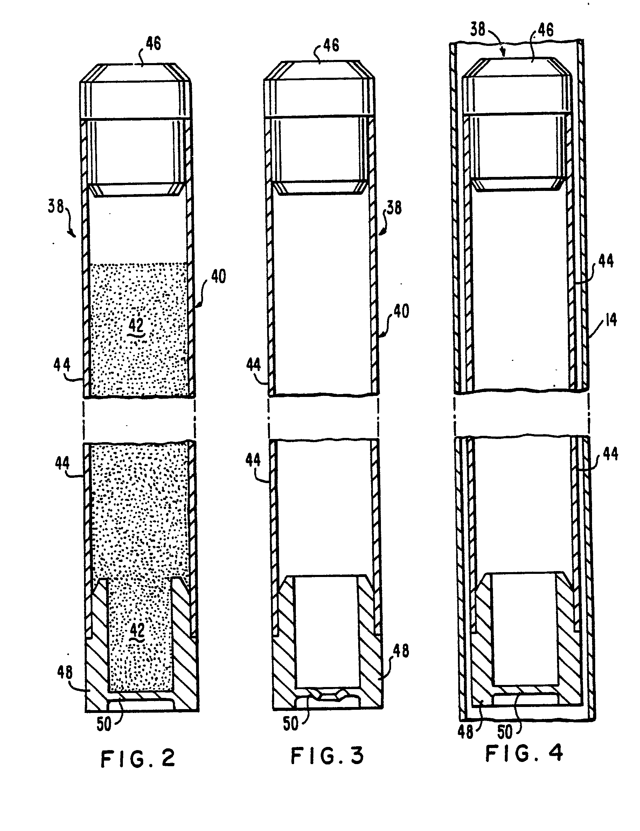

The invention provides a spectral-shift rod 38 for controlling excess reactivity. Only one such rod 38 is indicated in Fig. 1 but ordinarily there will be several rods of this type in the fuel assembly 10. As best seen from Fig. 2, the spectral-shift rod 38 comprises a hermetically sealed tubular member 40 containing a burnable poison material 42 which preferably is a boron substance, e.g. $B_2O_3$, $H_3BO_3$ (boric acid), $Li_2B_4O_7$, $LiBO_2$, or $K_2B_4O_7$, and is soluble in moderator/coolant liquid. The boron substance may be in liquid form, such as boric acid solution, or it may be a solid in the form of a loose or compacted or high-density compacted and sintered powder.

The tubular member 40 comprises a tube 44 and a pair of end plugs 46, 48 sealing its opposite ends, both the tube and the end plugs being made of a suitable material, such as a zirconium-based alloy. The tubular member 40 has a weakened region which is subject to rupture at a given level of internal pressure resulting as gas evolves from the poison material within the tubular member. Although the weakened region can be located at various places on the tubular member, preferably it takes the form of a thinned disc-like portion 50 formed in the center of the lower end plug 48.

In this condition, the spectral-shift rod 38 will initially act as a fixed burnable neutron absorber capable of controlling excess reactivity in that the water-soluble boron material 42 within the tube 44 will initially depress power by absorbing neutrons. However, as the boron is absorbing neutrons, it transmutes into lithium and helium gas, and the helium gas thus generated causes the internal pressure of the rod to rise (e.g. from a level of less than about 80 atmospheres at room temperature) until eventually is exceeds the rupture strength of the thinned disc-like portion 50, thereby causing the latter to rupture, as shown in Fig. 3. With the thinned portion 50 now broken, moderator/coolant water can enter the tube 44 and gradually dissolve the boron material 42 therein until eventually the whole rod is filled with moderator water, likewise as depicted in Fig. 3. Thus, rupture of the weakened rod region 50 and the consequential dissolution of the neutron-absorbing poison in the moderator water result in a spectral shift toward increased neutron moderation and, hence, utilization of the reactivity initially designed into the fuel assembly.

Fig. 4 merely illustrates te disposition of the spectral-shift rod 38 in one of the guide thimbles 14 in place of a control rod. It could be connected to one of the arms 36 of the control mechanism 32.

It will be appreciated that the spectral shift rod 38 can be tailored, as desired, to match the particular conditions prevailing in the fuel assembly. For instance, the rod can be designed to rupture at the desired time during the core operating cycle by varying the plenum volume of the rod and/or by varying the intitial internal pressure within different ones of the rods. By properly varying these two parameters, it is posisible to add moderator water which increases reactivity as desired during the cycle. For example, it would be possible to have 25% of the spectral shift rods rupture 40% through the cycle, 35% of the rods rupture approximately 60% through the cycle, and the remaining 40% of the rods rupture at about 80% through the cycle. Although there would be some uncertainty as to the process time when rupture would occur, the precise time is not too critical since there would be statistical variation so that relatively small reactivity changes can easily be accommodated by control rod movements or changes in coolant boron concentration or flow.

**Claims**

1. A nuclear fuel assembly for use in a nuclear reactor core which has excess reactivity initially designed into it and has moderator/coolant liquid flowing therethrough when in operation, said fuel assembly including means for controlling the excess reactivity, said means comprising at least one spectral-shift rod (38) in the form of a hermetically sealed tubular member (40) which contains a burnable poison material (42) which material generates gas when exposed to the operating conditions existing in the reactor core and which material is soluble in said moderator/coolant liquid, said tubular member (40) has a wall region (50) adapted to rupture at a predetermined level of gas pressure within the tubular member, thereby to enable the moderator/coolant liquid to come into contact with the burnable poison material therein.

2. A nuclear fuel assembly according to claim 1, characterized in that said wall region (50) is an end portion of the tubular member having a reduced wall thickness.

3. A nuclear fuel assembly according to claim 2, characterized in that said sealed tubular member (40) comprises a tube (44), and a pair of end plugs (46, 48) disposed on and sealing the opposite ends of said tube, said wall portion (50) of reduced thickness comprising a disc-like end portion of at least one (48) of said end plugs.

4. A nuclear fuel assembly according to claim 1, 2 or 3, characterized in that said tubular member (40) is hermetically sealed having a predetermined elevated initial internal pressure selected to cause rupture of said wall region (50) to occur at a pre-known time during operation of the reactor core.

**Patentansprüche**

1. Kernbrennelement zum Einsatz in einem Kernreaktorkern, der mit anfänglicher Überschußreaktivität ausgelegt ist und im Betrieb von einer Moderator/Kühlflüssigkeit durchströmt ist, mit Mitteln zur Steuerung der Überschußreaktivität, die mindestens einen Spektralverschiebungsstab (38) in Form eines gasdicht abgeschlossenen rohrförmigen Bauteils (40) aufweisen, der ein abbrennbares Neutronengiftmaterial (42) enthält, das, wenn es den im Reaktorkern herrschenden Betriebsbedingungen ausgesetzt ist, Gas erzeugt und das in der Moderator/Kühlflüssigkeit löslich ist, wobei das rohrförmige Bauteil (40) einen als Sollbruchstelle bei einem vorgegebenen Gasdruck innerhalb des rohrförmigen Bauteils ausgelegten Wandereich (50) aufweist, damit die Moderator/Kühlflüssigkeit dann in Berührung mit dem darin enthaltenen abbrennbaren Neutronengiftmaterial kommen kann.

2. Kernbrennelement nach Anspruch 1, dadurch gekennzeichnet, daß der gennante Wandbereich (50) ein Endbereich des rohrförmigen Bauteils mit verringerter Wanddicke ist.

3. Kernbrennelement nach Anspruch 2, dadurch gekennzeichnet, daß das abgeschlossene rohrförmige Bauteil (40) ein rohr (44) und zwei Endstopfen (46, 48) aufweist, die an beiden Rohrenden angeordnet sind und diese verschließen, und daß der genannte Wandbereich (50) verringerter Dicke einen scheibenartigen Endabschnitt mindestens eines (48) der genannten Endstopfen darstellt.

4. Kernbrennelement nach Anspruch 1, 2 oder 3, dadurch gekennzeichnet, daß das rohrförmige Bauteil (40) gasdicht abgeschlossen ist und einen vorgegebenen erhöhten Anfangsinnendruck aufweist, der so gewählt ist, daß ein Bruch des genannten Wandbereichs (50) nach einer bekannten Betriebsdauer des Reaktors kerns auftritt.

**Revendications**

1. Assemblage combustible nucléaire utilisable dans un coeur de réacteur nucléaire qui a en lui-même un excédent de réactivité prévu et à travers lequel, en fonctionnement, circule un liquide agissant comme modérateur/caloporteur, ledit assemblage combustible comportant un moyen pour commander l'excédent de réactivité, ledit moyen comportant au moins un barre (38) de commande par déplacement spectral sous la forme d'un élément tubulaire (40) hermétiquement étanche qui contient un poison consommable (42), lequel poison génère un gas quand il est soumis aux conditions de fonctionnement régnant dans le coeur du réacteur et lequel poison est soluble dans ledit liquide agissant comme modérateur/caloporteur, ledit élément tubulaire (40) ayant une région (50) de paroi conçue pour se rompre à un niveau prédéterminé de pression de gaz à l'intérieur de l'élément tubulaire, pour permetter de ce fait au liquide agissant comme modérateur/caloporteur de venir au contact du poison consommable présent dans celui-ci.

2. Assemblage combustible nucléaire selon la revendication 1, caractérisé en ce que ladite région (50) de paroi est une partie à l'extrémité de l'élément tubulaire à moindre épaisseur de paroi.

3. Assemblage combustible nucléaire selon la revendication 2, caractérisé en ce que ledit élément tubulaire étanche (40) comporte un tube (44) et deux bouchons (46, 48) d'extrémités disposés aux extrémités opposées dudit tube et obturant celui-ci, ladite portion (50) de paroi à moindre épaisseur comportant une portion extrême analogue àc un disque d'au moins l'un (48) desdits bouchons d'extrémités.

4. Assemblage combustible nucléaire selon la revendication 1, 2 ou 3, caractérisé en ce que ledit élément tubulaire (40) est hermétiquement étanche, ayant une pression interne initiale prédéterminée élevée, choisie pour provoquer la rupture de ladite région (50) de paroi à un instant connu au préalable pendant le fonctionnement du coeur du réacteur.

FIG.1

FIG. 2

FIG. 3

FIG. 4